(19) Europäisches Patentamt

European Patent Office

Office européen des brevets

(11) **EP 0 691 794 B1**

## (12) EUROPÄISCHE PATENTSCHRIFT

(45) Veröffentlichungstag und Bekanntmachung des Hinweises auf die Patenterteilung:
**22.12.2004 Patentblatt 2004/52**

(51) Int Cl.$^7$: **H04Q 3/545**, H04Q 11/04, G06F 13/28

(21) Anmeldenummer: **95201775.4**

(22) Anmeldetag: **29.06.1995**

(54) **Vermittlungsvorrichtung mit einer DMA-Steuerung**

Switching device with DMA control

Dispositif de commutation à commande DMA

(84) Benannte Vertragsstaaten:
**DE FR GB**

(30) Priorität: **05.07.1994 DE 4423496**

(43) Veröffentlichungstag der Anmeldung:
**10.01.1996 Patentblatt 1996/02**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder:
• **Hemmert, Rudolf, Dipl.-Ing., c/o Philips**
**D-22335 Hamburg (DE)**
• **Fischer, Christian, Dipl.-Ing., c/o Philips**
**D-22335 Hamburg (DE)**

(74) Vertreter: **Volmer, Georg, Dipl.-Ing.**
**Philips Intellectual Property & Standards GmbH,**
**Postfach 50 04 42**
**52088 Aachen (DE)**

(56) Entgegenhaltungen:
**EP-A- 0 373 291        WO-A-85/00262**
**US-A- 4 127 742**

**Beschreibung**

Die Erfindung bezieht sich auf eine Vermittlungsvorrichtung mit einer Direkt-Speicherzugriffssteuerung, die zur Steuerung einer Übertragung von Daten zwischen einem Datenspeicher und einer Ein-/ Ausgabeeinheit dient.

Eine solche Vermittlungsvorrichtung dient beispielsweise zur Verarbeitung digitaler Datenströme von PCM30-Systemen. Beim Anschluß einer Teilnehmereinrichtung an die Vermittlungsvorrichtung über eine sogenannte DSV2-Verbindungsleitung treten Datenraten von 2,048 MBit/s auf. Die Datenströme sind in aufeinanderfolgende Rahmen unterteilt, die aus jeweils zweiunddreißig Zeitschlitzen bestehen, die von 0 bis 31 durchnumeriert sind. Jeder einzelne Zeitschlitz umfaßt acht Bit. Dabei entsprechen die Zeitschlitze 1 bis 15 und 17 bis 31 jeweils einem Nutzkanal. Ein Zeitschlitz 0 enthält Melde- und Synchronisationsbits. Die Zeitschlitze 16 enthalten jeweils acht Datenbits für einen Signalisierungskanal, der zur Übertragung vermittlungstechnischer Informationen (Signalisierungsinformationen) dient. Die jeweils acht Bit eines Zeitschlitzes 16 enthalten die vermittlungstechnische Information für zwei Nutzkanäle. Die Zeitschlitze 16 von sechzehn aufeinanderfolgenden Rahmen enthalten die vermittlungstechnischen Informationen für alle 30 zu vermittelnden Nutzkanäle (IKZ50-Signalisierung).

Um eine vermittlungstechnische Verarbeitung eines ankommenden bzw. abgehenden 2,048 MBit/s-Datenstroms zu ermöglichen, müssen die Datenbits des Signalisierungskanals (Zeitschlitze 16) von mindestens 16 aufeinanderfolgenden Rahmen in einem Datenspeicher zwischengespeichert werden.

Der Datenspeicher weist sowohl für den ankommenden als auch den abgehenden Datenstrom jeweils einen vorgebbaren Speicherbereich auf. Ein ankommender Datenstrom wird von der Eingabeeinheit empfangen, von der aus die Datenbits des Signalisierungskanals über einen Datenbus an den Datenspeicher übertragen werden. Weiterhin werden im Datenspeicher abgelegte Signalisierungsdaten für den abgehenden Datenstrom über den Datenbus an die Ausgabeeinheit übertragen.

Es ist bekannt, zur Steuerung der Datenübertragung zwischen einer Ein-/ Ausgabeeinheit und einem Datenspeicher eine Direkt-Speicherzugriffssteuerung (DMA, "Direct Memory Access") zu verwenden, um einen Prozessor nicht mit dieser Aufgabe zu belasten. Der Prozessor kann während der Datenübertragung andere prozessorinterne Funktionen ausführen. Aus dem US-Patent Nr. 5,251,303 ist der Einsatz einer Direkt-Speicherzugriffssteuerung (DMA) zur Steuerung einer Übertragung von Daten zwischen Ein-/Ausgabeeinheiten und einem Datenspeicher in Digitalrechnern bekannt. Dabei dient die Direkt-Speicherzugriffssteuerung zur Erzeugung von Adressen (Zeigern) zur Adressierung des jeweiligen Speicherbereichs des Datenspeichers, in den die zu übertragenden Daten eingelesen oder ausgelesen werden.

Aus dem Dokument WO8500262A ist der Einsatz einer Direkt-Speicherzugriffssteuerung zur Abspeicherung von Daten in einem Datenspeicher und eines Kontrollers zur Initialisierung der Direkt-Speicherzugriffssteuerung innerhalb eines bestimmten Bauteils eines Fernmeldevermittlungssystems, nämlich innerhalb eines Block Transfer Empfängers (Block Transfer Receiver) bekannt. ). Dabei besteht die Adresse einer Speicherstelle des Datenspeichers aus 24 Adressbits. Da die verwendete Direkt-Speicherzugriffssteuerung nur 16 Adressbits kontrollieren kann, erzeugt sie lediglich einen Teil der Adresse, nämlich das niederwertige und das mittelwertige Byte. Der übrige Teil der Adresse, also das hochwertige Byte, wird von einem externen Register erzeugt, welches selber durch den Kontroller initialisiert wird.

Vor Beginn einer Übertragung von Daten muß die Direkt-Speicherzugriffssteuerung initialisiert werden. Bei der Initialisierung werden für jeden Kanal der Direkt-Speicherzugriffssteuerung jeweils ein Adreßregister für eine Quelladresse und ein Adreßregister für eine Zieladresse auf jeweils eine Startadresse gesetzt, wobei für jede Übertragungsrichtung jeweils ein Kanal vorgesehen ist. Die Quelladresse adressiert die Datenquelle, die Zieladresse adressiert die Datensenke. Weiterhin wird bei der Initialisierung der Direkt-Speicherzugriffssteuerung die Anzahl der Datenbytes festgelegt, die bei einem Datenübertragungszyklus übertragen werden sollen. Bei der Datenübertragung eines Datenbytes wird ein Zähler der Direkt-Speicherzugriffssteuerung inkrementiert oder dekrementiert. Entspricht die Anzahl der Inkrementierungen oder Dekrementierungen (und damit der zugehörige Zählerstand) der bei der Initialisierung vorgegebenen Anzahl an zu übertragenden Datenbytes, so ist vor einer weiteren Datenübertragung zunächst eine erneute Initialisierung der Direkt-Speicherzugriffssteuerung erforderlich.

Bei einer Vermittlungsvorrichtung zur Verarbeitung von Datenströmen mit einer Datenrate von 2,048 MBit/s wie eingangs beschrieben, haben die aufeinanderfolgenden Zeitschlitze 16 des Signalisierungskanals jeweils einen zeitlichen Abstand von 125 µs, d. h. eine Initialisierung der Direkt-Speicherzugriffssteuerung nach dem Beschreiben/Auslesen der letzen Speicherzelle des jeweiligen Speicherbereichs des Datenspeichers, in dem die Daten- bzw. Signalisierungsbits der Zeitschlitze 16 des ankommenden bzw. abgehenden Datenstroms zwischengespeichert werden, muß innerhalb von 125 µs erfolgen. Die Initialisierung der Direkt-Speicherzugriffssteuerung wird mit Hilfe eines Prozessors durchgeführt, dessen Hauptaufgabe die Verarbeitung der im Datenspeicher abgelegten Signalisierungsdaten ist. Bei hohen Datenraten muß der Prozessor die Initialisierungen der Direkt-Speicherzugriffssteuerung in so kurzen Zeitabständen durchführen, daß nicht mehr genügend Zeit für seine sonstigen Aufgaben, insbesondere die Verarbeitung der Signalisierungdaten, zur Verfügung steht.

Der Erfindung liegt daher die Aufgabe zugrunde, bei der Vermittlungsvorrichtung der eingangs genannten Art die Übertragung von Daten auch bei hohen Datenraten mit Hilfe der Direkt-Speicherzugriffssteuerung auf einfache Weise zu ermöglichen.

Die Aufgabe wird durch eine Vermittlungsvorrichtung gemäß Anspruch 1 gelöst.

Durch den von der Direkt-Speicherzugriffssteuerung erzeugten ersten Teil der Adresse wird die relative Lage des zu adressierenden Speicherbereichs innerhalb des Datenspeichers festgelegt. Der zweite Teil der Adresse dient zur Bestimmung der einzelnen Speicherzellen des zu adressierenden Speicherbereichs, der nicht unbedingt zusammenhängend sein muß. Der als Zähler wirkende Generator ersetzt durch die Erzeugung des zweiten Teils der Adresse die Zählfunktion der Direkt-Speicherzugriffssteuerung. Da der Generator den zweiten Teil der Adresse zyklisch erzeugt, d.h. nach der Adressierung aller Adressen des zu adressierenden Speicherbereichs automatisch wieder in seinen Anfangszustand übergeht, kann auf eine zyklische Initialisierung der Direkt-Speicherzugriffssteuerung verzichtet werden. Eine Initialisierung ist damit nur noch einmal erforderlich.

In einer Ausgestaltung der Erfindung ist eine vom Status der Direkt-Speicherzugriffssteuerung abhängige Umschaltvorrichtung vorgesehen, die während eines ersten Schaltzustandes zur Kopplung einer bestimmten Anzahl an Adreßleitungen, die zur Lieferung von Adreßbits an den Datenspeicher dienen, mit einer entsprechenden Anzahl an Adreßausgängen einer einen Prozessor aufweisenden Steuereinheit und während eines zweiten Schaltzustandes zur Kopplung dieser Adreßleitungen mit einer entsprechenden Anzahl an Generatorausgängen zur Erzeugung des zweiten Teils der Adresse dient.

Während des ersten Schaltzustandes der Umschaltvorrichtung, bei der die Direkt-Speicherzugriffssteuerung den Status "inaktiv" aufweist, kann der Prozessor auf den Adreßbus mit den Adreßleitungen zugreifen und beispielsweise Steuerungsfunktionen erfüllen. Während des zweiten Schaltzustandes ist die Direkt-Speicherzugriffssteuerung im Status "aktiv". Sie dient nun zur Steuerung einer Datenübertragung zwischen der Ein-/ Ausgabeeinheit und dem Datenspeicher. Der Prozessor wird bei diesem Status nicht durch Steuerungsfunktionen für diese Datenübertragung belastet und kann währenddessen z. B. Berechnungen ausführen, ohne auf den Adreß- bzw. Datenbus zuzugreifen. Die als Mehrfachschalter wirkende Umschaltvorrichtung ist leicht zu realisieren. Sie kann beispielsweise als integrierter Schaltkreis auf einem Chip ausgeführt werden.

In einer anderen Ausgestaltung der Erfindung ist während der Übertragung von Daten zwischen dem Datenspeicher und der Ein-/Ausgabeeinheit in der ersten der beiden Übertragungsrichtungen eine bestimmte Anzahl an Adreßbits erzeugenden Generatorausgängen mit jeweils einer Adreßleitung gekoppelt. In der zweiten Übertragungsrichtung ist mindestens einer dieser Generatorausgänge nicht mit einer Adreßleitung gekoppelt.

Auf diese Weise sind unterschiedlich große, d. h. eine unterschiedliche Anzahl an Speicherzellen aufweisende, Speicherbereiche des Datenspeichers für die beiden Übertragungsrichtungen adressierbar. Ist beispielsweise in der ersten Übertragungrichtung ein Generatorausgang mehr mit einer Adreßleitung gekoppelt als in der zweiten Übertragungsrichtung, so sind für die erste Übertragungsrichtung doppelt so viele Speicherzellen adressierbar wie für die zweite Übertragungsrichtung. Dies ist auf einfache Weise dadurch realisierbar, daß einer der Einzelschalter der als Mehrfachschalter ausgeführten Umschaltvorrichtung in Abhängigkeit von der Übertragungsrichtung unabhängig von den anderen Einzelschaltern der Umschaltvorrichtung angesteuert wird und somit einen der Generatorausgänge in der ersten Übertragungsrichtung mit einer Adreßleitung koppelt. In der zweiten Übertragungsrichtung wird dieser Generatorausgang nicht mit einer Adreßleitung gekoppelt, was einem dritten Schaltzustand der Umschaltvorrichtung entspricht. Insbesondere ist für jede Übertragungrichtung ein unabhängiger Kanal der Direkt-Speicherzugriffssteuerung vorgesehen. Der von der Direktspeicherzugriffssteuerung zu erzeugende erste Teil einer Adresse enthält in diesem Fall für jeden Kanal eine unterschiedliche Anzahl an Adreßbits, die für jede Übertragungsrichtung fest sind.

Die Erfindung bezieht sich auch auf eine Schaltungsanordnung gemäß Anspruch 4 mit einer Direkt-Speicherzugriffssteuerung (DMA), die zur Steuerung einer Übertragung von Daten zwischen einem Datenspeicher und einer anderen Funktionseinheit dient.

Die Erfindung ist nicht auf Vermittlungsvorrichtungen beschränkt. Sie ist allgemein bei der Datenübertragung mit Hilfe einer Direkt-Speicherzugriffssteuerung einsetzbar, wenn für deren Initialisierung nicht genügend Zeit zur Verfügung steht. Die Datenübertragung kann dabei zwischen dem Datenspeicher und einer Ein-/ Ausgabeeinheit, aber auch beispielsweise zwischen zwei Datenspeichern erfolgen.

Ein Ausführungsbeispiel der Erfindung wird nachstehend anhand der Zeichnungen näher erläutert. Es zeigen:

Fig. 1        eine Vermittlungsvorrichtung,

Fig. 2        eine Peripherie-Baugruppe der Vermittlungsvorrichtung nach Fig. 1,

Fig. 3        die Rahmenstruktur eines zu verarbeitenden Datenstroms und

Fig. 4A u. 4B  zwei Speicherbereiche für die Signalisierungsdaten eines ankommenden bzw. abgehenden Datenstroms.

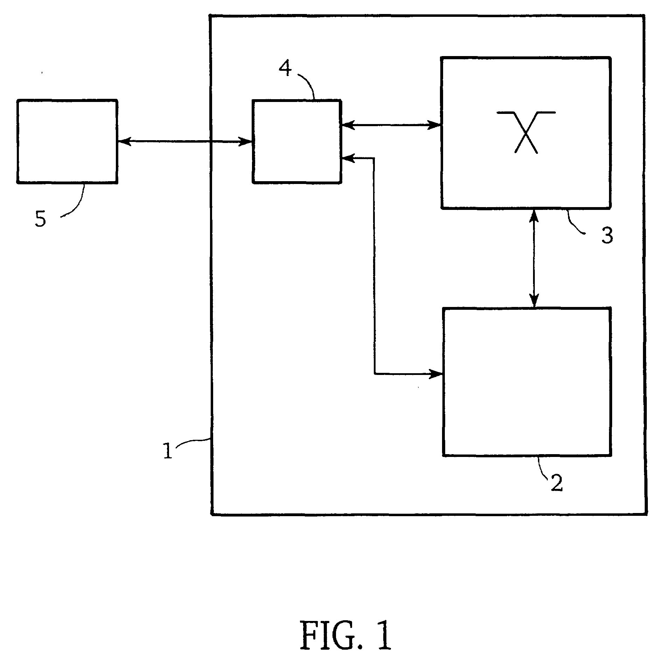

In Fig. 1 ist eine digitale Vermittlungsvorrichtung 1 dargestellt, die für den Einsatz in einem Netz mit PCM30-Übertragung von Daten vorgesehen ist. Sie enthält eine zentrale Steuereinheit 2, ein Koppelfeld 3 und eine Peripherie-Baugruppe 4. Die zentrale Steuereinheit 2 dient zur Steuerung und Überwachung aller Funktionseinheiten der Vermittlungsvorrichtung 1. Die Peripherie-Baugruppe 4 ist über eine DSV2-Verbindungsleitung mit einer Nebenstellenanlage 5 gekoppelt, wobei anstelle der Nebenstellenanlage auch andere Teilnehmereinrichtungen oder auch andere Vermittlungsstellen anschließbar sind. Es ist eine Datenübertragung zwischen der Peripherie-Baugruppe 4 und der Nebenstellenanlage 5 mit einer Datenrate von 2,048 MBit/s in beiden Übertragungsrichtungen vorgesehen. Über nicht dargestellte weitere Peripherie-Baugruppen können weitere Nebenstellenanlagen, Teilnehmerendgeräte oder auch eine Fernvermittlungsstelle mit der Vermittlungsvorrichtung 1 gekoppelt werden. Die dargestellte Vermittlungsvorrichtung 1 wird im vorliegenden Fall als Ortsvermittlungsstelle eingesetzt.

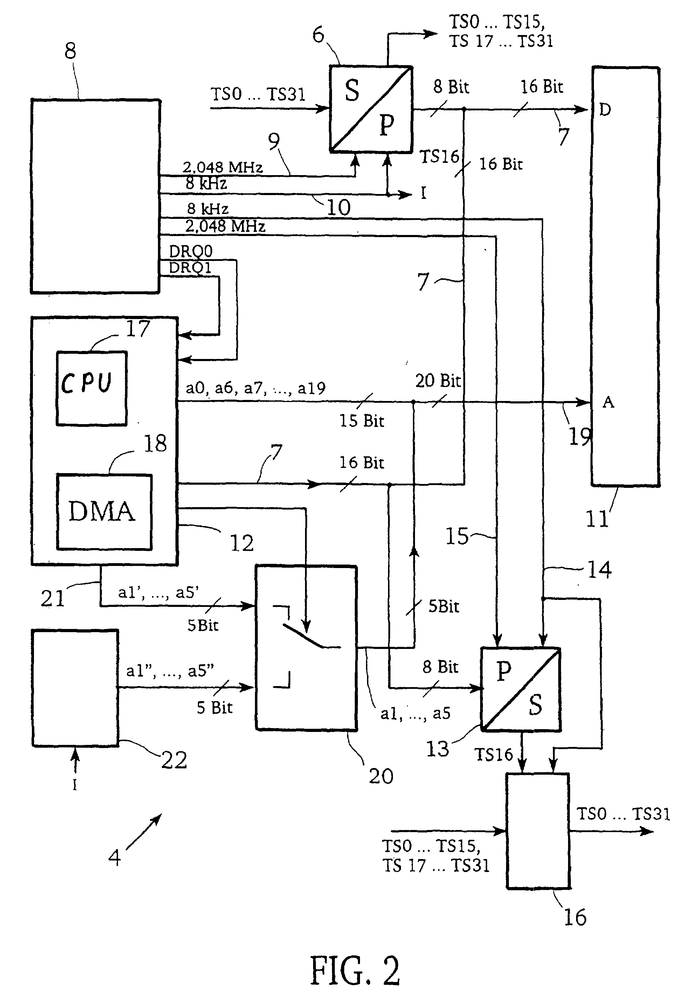

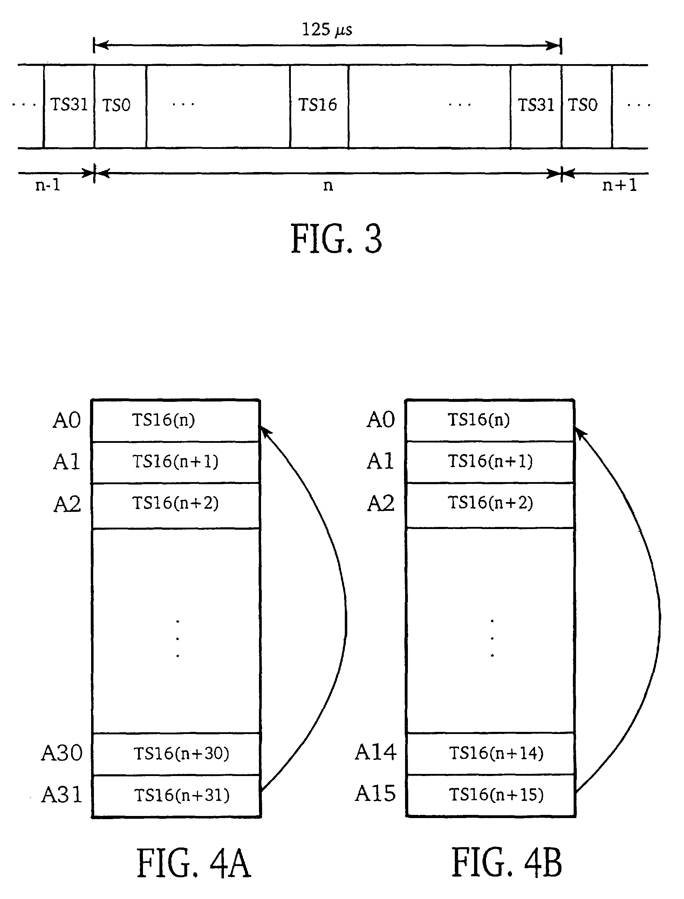

Fig. 2 zeigt den prinzipiellen Aufbau der Peripherie-Baugruppe 4. Sie enthält als Eingabeeinheit einen Seriell-Parallel-Wandler 6, mit dem ein serieller Datenstrom mit einer Datenrate von 2,048 MBit/s empfangen wird. Der Datenstrom ist in aufeinanderfolgende Rahmen aufgeteilt, die jeweils aus zweiunddreißig Zeitschlitzen TS0 bis TS31 bestehen. Die Rahmenstruktur eines solchen Datenstroms ist in Fig. 3 dargestellt. Es sind ein Rahmen n, das Ende eines vorhergehenden Rahmens n-1 und der Anfang eines nachfolgenden Rahmens n+1 dargestellt. Die Zeitschlitze TS0 bis TS31 eines jeden Rahmens enthalten jeweils acht Datenbit bzw. ein Datenbyte. Jeweils ein Zeitschlitz eines Rahmens ist einem Übertragungskanal zugeordnet. Die Zeitschlitze TS1 bis TS15 und die Zeitschlitze TS17 bis TS31 enthalten die Datenbits für dreißig Nutzkanäle. Der Zeitschlitz TS0 enthält Melde- bzw. Synchronisationsbits. Der Zeitschlitz TS16 ist einem Signalisierungskanal zugeordnet, über den die digitalen vermittlungstechnischen Informationen übertragen werden. Ein Rahmen mit zweiunddreißig Zeitschlitzen erstreckt sich über eine Zeitdauer von 125 μs, so daß zwei zum gleichen Kanal gehörende Zeitschlitze zweier benachbarter Rahmen (z.B. zwei benachbarte Zeitschlitze TS16) ebenfalls jeweils 125 μs zeitlich auseinanderliegen.

Der Seriell-Parallel-Wandler 6 ist ausgangsseitig mit acht Datenleitungen eines insgesamt sechzehn Datenleitungen aufweisenden bidirektionalen Datenbusses 7 bekoppelt. Die Anzahl der Leitungen eines Busses ist in Fig. 2 durch die Anzahl an parallel übertragbaren Bits angedeutet (16 Bit beim Datenbus 7). Ein Funktionsblock 8 führt dem Seriell-Parallel-Wandler 6 über eine Steuerleitung 9 ein Taktsignal mit der Frequenz 2,048 MHz zur Synchronisation auf die einzelnen Datenbits des ankommenden Datenstroms und über eine Steuerleitung 10 ein Taktsignal mit der Frequenz 8 kHz (dem Kehrwert von 125 μs) zur Synchronisation auf

die Zeitschlitze TS16 des ankommenden Datenstroms zu.

An den Datenbus 7 sind weiterhin ein Datenspeicher (RAM) 11 und eine Steuereinheit 12 angeschlossen. Die acht mit dem Seriell-Parallel-Wandler 6 gekoppelten Datenleitungen des Datenbusses 7 sind weiterhin mit einem Parallel-Seriell-Wandler 13 gekoppelt. Diesem werden über zwei Steuerleitungen 14 und 15 zwei Taktsignale mit den Frequenzen 8 kHz und 2,048 MHz zugeführt, die zur Synchronisation auf die Zeitschlitze TS16 bzw. die einzelnen Datenbits des abgehenden Datenstroms dienen. Der Parallel-Seriell-Wandler 13 ist ausgangsseitig mit einem Multiplexer 16 gekoppelt, dem außerdem über die Steuerleitung 14 das 8 kHz-Taktsignal zugeführt wird und der die Datenbits der Zeitschlitze TS16 in den abgehenden Datenstrom mit den Zeitschlitzen TS0 bis TS31 einfügt.

Die Steuereinheit 12 ist im vorliegenden Fall ein Mikrocontroller der Firma Intel vom Typ 80C186 (von Intel als Mikroprozessor bezeichnet). Bei diesem Mikrocontroller ist eine Adressierung von Datenwörtern, die aus 16 Bit bestehen, mit aus 20 Bit bestehenden Adressen vorgesehen. Die Steuereinheit 12 enthält neben einem Prozessor (CPU) 17 unter anderem auch eine Direkt-Speicherzugriffssteuerung (DMA) 18. Der Funktionsblock 8 liefert ein Steuersignal DRQ0 und ein Steuersignal DRQ1 an die Steuereinheit 12. In Abhängigkeit von diesen Steuersignalen wird die Direkt-Speicherzugriffssteuerung 18 aktiviert. Das Steuersignal DRQ0 steuert einen ersten Kanal der Direkt-Speicherzugriffssteuerung 18, das Steuersignal DRQ1 steuert einen zweiten Kanal der Direkt-Speicherzugriffssteuerung 18. Beide Kanäle arbeiten unabhängig voneinander.

Dem Datenspeicher 11 werden über einen Adreßbus 19, der zur Übertragung von aus zwanzig Bit bestehenden Adressen vorgesehen ist und somit zwanzig Adreßleitungen aufweist, Adressen zugeführt. Fünfzehn der zwanzig Adreßausgänge der Steuereinheit 12, die die Adreßbits a0, a6, a7,..., a19 (erster Teil einer Adresse) liefern, sind mit fünfzehn entsprechenden Adreßleitungen des Adreßbusses 19 gekoppelt. Dabei stellt a0 das geringstwertige Bit und a19 das höchstwertige Bit dar. Die übrigen fünf Adreßleitungen des Adreßbusses 19 sind mit fünf Ausgängen einer Umschaltvorrichtung 20 gekoppelt, die als ein aus fünf Einzelschaltern bestehender Mehrfachschalter ausgeführt ist. Dieser wird von der Steuereinheit 12 in drei verschiedene noch zu erläuternde Schaltzustände gesteuert.

In einem ersten Schaltzustand der Umschaltvorrichtung 20 ist die Direkt-Speicherzugriffssteuerung 18 inaktiv, und der Prozessor 17 dient zur Lieferung aller zwanzig Adreßbits a0 bis a19 einer Adresse. Fünf Adreßausgänge 21 der Steuereinheit 12, die die fünf Adreßbits a1',..., a5' liefern, werden durch die Umschaltvorrichtung 20 auf fünf Adreßleitungen des Adreßbusses 19 geschaltet. Dann gilt:

a1 = a1', a2 = a2',..., a5 = a5'.

In einem zweiten Schaltzustand der Umschaltvorrichtung 20 werden die fünf Ausgänge eines 5-Bit-Dualzählers (Generators) 22, die zur Lieferung von fünf Zahlerbits a1'', ..., a5'' dienen, auf die fünf Ausgänge der Umschaltvorrichtung 20 und damit auf die entsprechenden Adreßleitungen des Adreßbusses 19 durchgeschaltet. Der Zähler 22 ist mit Hilfe des vom Funktionsblock 8 gelieferten Taktsignals mit der Frequenz 8 kHz auf der Steuerleitung 10 so auf die Zeitschlitze TS16 des ankommenden Datenstroms synchronisiert, daß bei jedem ankommenden Zeitschlitz TS16 der Zählerstand nach der Übertragung der acht Signalisierungsbits in den Datenspeicher 11 (erste Übertragungsrichtung) inkrementiert wird. Die Adreßbits a1,..., a5 (zweiter Teil der Adresse) sind in diesem Schaltzustand gleich den vom Zähler 22 gelieferten Bits a1'',..., a5''. Es gilt:

a1 = a1'', a2 = a2'',..., a5 = a5''.

In diesem Schaltzustand ist der erste Kanal der Direkt-Speicherzugriffssteuerung 18 aktiv und er steuert die Datenübertragung der Datenbits der Zeitschlitze TS16 des ankommenden Datenstroms vom Seriell-Parallel-Wandler 6 (Eingabeeinheit) in einen ersten Speicherbereich des Datenspeichers 11, wobei durch Anlegen eines Schreibsignals durch die Direkt-Speicherzugriffssteuerung an eine Schrei b/Lese-Steuerleitung eines nicht dargestellten Kontrollbusses angezeigt wird, daß eine (den ersten Speicherbereich des Datenspeichers 11 adressierende) Zieladresse am Adreßbus anliegt. Der Prozessor 17 liefert in diesem Fall keine Daten- bzw. Adreßbits an die Daten- bzw. Adreßausgänge der Steuereinheit 12. Die Adreßbits a0, a6, a7, ..., a19 werden vom ersten Kanal der aktiven Direkt-Speicherzugriffssteuerung 18 erzeugt. Diese Adreßbits sind konstant. Sie werden bei der nur einmal durchzuführenden Initialisierung der Direkt-Speicherzugriffssteuerung 18 durch Initialisierung der Zieladresse des ersten Kanals festgelegt. Bei der Initialisierung wird außerdem die Quelladresse für den ersten Kanal der Direkt-Speicherzugriffssteuerung, also die sich nicht ändernde Adresse des Seriell-Parallel-Wandlers 6 festgelegt.

Für den Fall, daß der zweite Kanal der Direkt-Speicherzugriffssteuerung 18 aktiv ist, wird die Umschaltvorrichtung 20 in einen dritten Schaltzustand gesteuert und es erfolgt eine Übertragung von Datenbits für die Zeitschlitze TS 16 eines abgehenden Datenstroms von einem zweiten Speicherbereich des Datenspeichers 11 zum Parallel-Seriell-Wandler 13, wobei durch Anlegen eines Lesesignals durch die Direkt-Speicherzugriffssteuerung an die Schreib/Lese-Steuerleitung des nicht dargestellten Kontrollbusses angezeigt wird, daß eine (den zweiten Speicherbereich des Datenspeichers 11 adressierende) Quelladresse am Adreßbus anliegt. Der zweite Speicherbereich hat nur halb so viele Speicherzellen wie der erste Speicherbereich. In diesem Schaltzustand werden nur vier der fünf Ausgänge des Zählers 22 über die Umschaltvorrichtung 20 auf entsprechende Adreßleitungen des Adreßbusses 19 durchgeschaltet. Es gilt somit für die ersten vier der von der Umschaltvorrichtung 20 gelieferten Adreßbits:

a1 = a1'',..., a4 = a4''.

Das fünfte von der Umschaltvorrichtung 20 gelieferte Adreßbit a5 wird nicht vom Zähler 22, sondern von dem das Adreßbit a5' liefernden Adreßausgang der Steuereinheit 12 und damit vom zweiten Kanal der Direktspeicherzugriffssteuerung 18 geliefert. Es gilt:

a5 = a5'.

Die Adreßbits a0, a6, a7, ..., a19 werden analog zum zweiten Schaltzustand ebenfalls vom zweiten Kanal der Direkt-Speicherzugriffssteuerung 18 erzeugt. Sie werden zusammen mit dem Adreßbit a5 bei der Initialisierung des zweiten Kanals der Direkt-Speicherzugriffssteuerung 18 durch Initialisierung der Quelladresse festgelegt und sind ebenfalls konstant. Bei der Initialisierung des zweiten Kanals wird außerdem die Zieladresse für den zweiten Kanal der Direkt-Speicherzugriffssteuerung 18, also die sich nicht ändernde Adresse des Parallel-Seriell-Wandlers 13 festgelegt.

Entsprechend den beschriebenen drei Schaltzuständen der Umschaltvorrichtung 20 werden im folgenden drei Betriebszustände der Peripherie-Baugruppe 4 der Vermittlungsvorrichtung 1 unterschieden. Im ersten Betriebszustand, in dem die Umschaltvorrichtung 20 sich im ersten Schaltzustand befindet, ist die Direkt-Speicherzugriffssteuerung 18 inaktiv. Der Prozessor 17 dient in diesem Fall zur Lieferung der Adreßbits a0, a1,..., a19 an den Adreßbus 19. Weiterhin werden über den Datenbus 7 vom Prozessor 17 Daten empfangen oder gesendet. Im zweiten oder dritten Betriebszustand, die dem zweiten bzw. dritten Schaltzustand der Umschaltvorrichtung 20 entsprechen, ist die Direkt-Speicherzugriffssteuerung 18 aktiv. Sie dient dazu, entweder vom Seriell-Parallel-Wandler 6 empfangene Datenbits des zyklisch auftretenden Zeitschlitzes TS16 in einen ersten Speicherbereich des Datenspeichers 11 einzulesen (erste Übertragungsrichtung) oder aus einem zweiten Speicherbereich des Datenspeichers 11 Datenbits auszulesen und diese mit Hilfe des Parallel-Seriell-Wandlers 13 und des Multiplexers 16, die zusammen als Ausgabeeinheit dienen, in die Zeitschlitze TS16 eines vom Multiplexer 16 gelieferten abgehenden Datenstroms einzufügen (zweite Übertragungsrichtung). Das Einlesen von Datenbits eines Zeitschlitzes TS16 in den Datenspeicher 11 wird vom ersten

Kanal der Direkt-Speicherzugriffssteuert. Das Auslesen von Daten aus dem zweiten Speicherbereich für abgehende Zeitschlitze TS16 erfolgt mit Hilfe des zweiten Kanals der Direkt-Speicherzugriffssteuerung 18. Die Direkt-Speicherzugriffssteuerung 18 dient somit zur Übertragung von Daten von dem als Eingabeeinheit arbeitenden Seriell-Parallel-Wandler 6 zum Datenspeicher 11 und zur Übertragung von Daten vom Datenspeicher 11 zu einer Ausgabeeinheit, die im vorliegenden Fall aus dem Parallel-Seriell-Wandler 13 und dem Multiplexer 16 besteht.

Der Parallel-Seriell-Wandler 13 erzeugt aus den aus dem zweiten Speicherbereich des Datenspeichers 11 ausgelesenen Datenbits, die über acht Datenleitungen des Datenbusses 7 parallel an den Parallel-Seriell-Wandler 13 geliefert werden, serielle Datenbits, die vom Multiplexer 16 in den Zeitschlitz TS16 des abgehenden Datenstroms eingefügt werden. Die Datenbits der restlichen Zeitschlitze TS0 bis TS15 und TS17 bis TS31 werden dem Multiplexer 16 vom Koppelfeld 3 geliefert.

In Fig. 4A und 4B sind der erste und zweite Speicherbereich des Datenspeichers 11 dargestellt. Die adressierbaren Speicherzellen können aus sechzehn Bit bestehende Datenworte speichern. Da im vorliegenden Ausführungsbeispiel ein Zeitschlitz TS16 aber nur acht Bit enthält, werden nur die Hälfte der Stellen der Speicherzellen beschrieben. Die übrigen acht Stellen werden nicht genutzt, können aber für Prüfzwecke oder evtl. für einen weiteren 2,048 MBit/s-Datenstrom verwendet werden. Das nur die Hälfte der Stellen der Speicherzellen des ersten und zweiten Speicherbereichs des Datenspeichers 11 benutzt werden, erkennt man in Fig. 2 daran, daß einerseits der Seriell-Parallel-Wandler 6 ausgangsseitig und andererseits der Parallel-Seriell-Wandler 13 eingangsseitig nur mit acht Datenleitungen des Datenbusses 7 gekoppelt sind.

Der erste Speicherbereich des Datenspeichers 11 besteht nach Fig. 4A aus zweiunddreißig Speicherzellen, die mit Hilfe der Adressen A0, A1,..., A31 adressiert werden. Die aus jeweils zwanzig Bit bestehenden Adressen A0 bis A31 werden bei einem Zugriff des ersten Kanals der Direkt-Speicherzugriffssteuerung bzw. einer Übertragung von Signalisierungsbits der Zeitschlitze TS16 vom Seriell-Parallel-Wandler 6 zum Datenspeicher 11 auf folgende Weise erzeugt: Die Adreßbits a0, a6, a7,..., a19 (erster Teil einer Adresse) sind fest, werden von der Direkt-Speicherzugriffssteuerung 18 erzeugt und bestimmen die relative Lage des ersten Speicherbereichs im Datenspeicher 11. Die Adreßbits a1 bis a5 (zweiter Teil der Adresse) sind die ausgangsseitig am Zähler anliegenden Zählerbits a1" bis a5". Bei der Adresse a0 sind alle Zählerausgangsbits a1" bis a5" Null. Bei einem Impuls des vom Funktionsblock 8 erzeugten Taktsignals der Frequenz 8 kHz, das an der Steuerleitung 10 anliegt und auf einen Zählersteuereingang gegeben wird, erhöht der Zähler 22 seinen Zählerstand, so daß bei der Adresse A31 alle Zählerausgangsbits a1" bis a5" gleich 1 sind. Beim nächsten Taktimpuls werden die Zählerausgangsbits a1" bis a5" automatisch wieder auf 0 gesetzt, so daß nun wieder die Adresse A0 am Adreßbus anliegt. Mit dem 8 kHz-Taktsignal wird der Zähler 22 auf die Zeitschlitze TS16 des ankommenden Datenstroms synchronisiert. Der Zähler 22 erzeugt zyklisch die Adreßbits a1 bis a5 und übernimmt die Zählfunktion des ersten Kanals der Direkt-Speicherzugriffssteuerung 18, der damit nur vor Beginn eines zu verarbeitenden Datenstroms initialisiert werden muß. Die Anzahl der bei einem Datenübertragungszyklus zu übertragenden Datenbytes des ersten Kanals wird dabei auf Eins gesetzt. Ein Rücksprung von der Adresse A31 auf die Adresse A0 muß im vorliegenden Fall innerhalb von höchstens 125 μs erfolgen, d.h. innerhalb der Zeitspanne, die zwischen zwei aufeinanderfolgenden Zeitschlitzen TS16 liegt. Ein Rücksprung durch eine Reinitialisierung der Direkt-Speicherzugriffssteuerung 18 in dieser sehr kurzen Zeitspanne würde bewirken, daß dem Prozessor 17, mit dessen Hilfe die Reinitialisierung durchzuführen wäre, nicht mehr genügend Zeit für seine eigentlichen Aufgaben (insbesondere die Verarbeitung der Signalisierungsdaten) während dieser 125 μs zur Verfügung stehen würden.

Der erste Speicherbereich ist für die Abspeicherung der Datenbits von zweiunddreißig aufeinanderfolgenden Zeitschlitzen TS16 ausgelegt, damit während des Abspeicherns von Daten in die Speicherzellen mit den Adressen A0 bis A15 die Datenbits der Speicherzellen mit den Adressen A16 bis A31 für eine Weiterverarbeitung zur Verfügung stehen. Während eines Abspeicherns von Daten in die Speicherzellen mit den Adressen A16 bis A31 stehen dann die Datenbits der Speicherzellen mit den Adressen A0 bis A15 für eine Weiterverarbeitung zur Verfügung.

Bei dem in Fig. 4B dargestellten zweiten Speicherbereich, aus dem die Datenbits für die Zeitschlitze TS16 des abgehenden Datenstroms ausgelesen werden (zweite Übertragungsrichtung), reicht es aus, sechzehn Speicherzellen vorzusehen, da diese Datenbits direkt ohne eine Weiterverarbeitung in den abgehenden Datenstrom eingefügt werden. Zur Adressierung der 16 Speicherzellen wird das Zählerbit a5" (das höchstwertige Zählerbit) nicht vom Zähler 22 erzeugt, sondern wird vom der Direkt-Speicherzugriffssteuerung 18 (zweiter Kanal) wie die übrigen Adreßbits a0, a6, a7, ..., a19 auf einen konstanten Wert gesetzt.

Die Speicherzellen A0 bis A31 bzw. A0 bis A15 aus den Fig. 4A und 4B werden nur mit geradzahligen Adressen adressiert, da eine Speicherzelle aus zwei Byte, d.h. insgesamt sechzehn Bit besteht. Aus diesem Grund wird das geringstwertige Adreßbit a0 im Fall eines Zugriffs eines der beiden Kanäle der Direkt-Speicherzugriffssteuerung 18 nicht vom Zähler 22 erzeugt, sondern wird von der Direkt-Speicherzugriffssteuerung fest auf den Wert Null gesetzt.

**Patentansprüche**

1. Vermittlungsvorrichtung mit einer Direkt-Speicherzugriffssteuerung (DMA, 18), die zur Steuerung einer Übertragung von Daten zwischen einem Datenspeicher (11) und einer Ein-/ Ausgabeeinheit (6, 13, 16) dient, wobei die Direkt-Speicherzugriffssteuerung (DMA, 18) zur Erzeugung eines ersten Teils (a0, a6, a7, ..., a19) einer Adresse (a0, ..., a19) eines zu adressierenden Speicherbereichs vorgesehen ist,

   **dadurch gekennzeichnet,**

   **daß** ein als Zähler wirkender Generator (22) zur zyklischen Erzeugung eines zweiten Teils (a1, ..., a5) der Adresse (a0, ..., a19) die Zählfunktion der Direkt-Speicherzugriffssteuerung übernimmt.

2. Vermittlungsvorrichtung nach Anspruch 1,
   **dadurch gekennzeichnet,**
   **daß** eine vom Status der Direkt-Speicherzugriffssteuerung (DMA, 18) abhängige Umschaltvorrichtung (20)

   - während eines ersten Schaltzustandes zur Kopplung einer bestimmten Anzahl an Adreßleitungen, die zur Lieferung von Adreßbits an den Datenspeicher (11) dienen, mit einer entsprechenden Anzahl an Adreßausgängen (a1', ..., a5') einer einen Prozessor (CPU, 17) aufweisenden Steuereinheit (12) und
   - während eines zweiten Schaltzustandes zur Kopplung dieser Adreßleitungen mit einer entsprechenden Anzahl an Generatorausgängen (a1'', ..., a5'') zur Erzeugung des zweiten Teils (a1, ..., a5) der Adresse

   vorgesehen ist.

3. Vermittlungsvorrichtung nach Anspruch 1 oder 2,
   **dadurch gekennzeichnet,**
   **daß** während der Übertragung von Daten zwischen dem Datenspeicher (11) und der Ein-/Ausgabeeinheit (6, 13, 16) in der ersten der beiden Übertragungsrichtungen eine bestimmte Anzahl an Adreßbits erzeugenden Generatorausgängen (a1'', ..., a5'') mit jeweils einer Adreßleitung gekoppelt ist
   und **daß** in der zweiten Übertragungsrichtung mindestens einer dieser Generatorausgänge (a5'') nicht mit einer Adreßleitung gekoppelt ist.

4. Schaltungsanordnung zur Datenübertragung mit einer Direkt-Speicherzugriffssteuerung (DMA, 18), die zur Steuerung einer Übertragung von Daten zwischen einem Datenspeicher (11) und einer anderen Funktionseinheit (6, 13) dient, wobei die Direkt-Speicherzugriffssteuerung (DMA, 18) zur Erzeugung eines ersten Teils (a0, a6, a7, ..., a19) einer Adresse (a0, ..., a19) eines zu adressierenden Speicherbereichs vorgesehen ist,

   **dadurch gekennzeichnet,**

   **daß** ein als Zähler wirkender Generator (22) zur zyklischen Erzeugung eines zweiten Teils (a1, ..., a5) der Adresse (a0, ..., a19) die Zählfunktion der Direkt-Speicherzugriffssteuerung übernimmt.

**Claims**

1. A switching device having a direct memory access control (DMA, 18) used for controlling a data transfer between a data memory (11) and an input/output device (6, 13, 16), **characterized in that** the direct memory access control (DMA, 18) is provided for generating a first part (a0, a6, a7, ..., a19) of an address (a0, ..., a19) of a memory area to be addressed, **characterized in that** a generator (22) acting as a counter for cyclically generating a second part (a1, ..., a5) of the address (a0, ..., a19) takes over the count function of the direct memory access control.

2. A switching device as claimed in Claim 1, **characterized in that** a switching device (20) that depends on the status of the direct memory access control (DMA, 18), is provided

   - for coupling, during a first switching state, a certain number of address lines, which are used for supplying address bits to the data memory (11), to a corresponding number of address outputs (a1', ..., a5') of a control unit (12) which includes a processor (CPU, 17) and,
   - during a second switching state, for coupling these address lines to a corresponding number of generator outputs (a1'', ..., a5'') to generate the second part (a1, ..., a5) of the address.

3. A switching device as claimed in Claim 1 or 2, **characterized in that** a certain number of generator outputs (a1'', ..., a5'') producing address bits are coupled to one address line each during the data transfer between the data memory (11) and the input/output device (6, 13, 16) in the first of the two directions of data transfer, and **in that** in the second direction of data transfer at least one of these generator outputs (a5'') is not coupled to an address line.

4. A data transfer circuit arrangement comprising a direct memory access control (DMA, 18) used for controlling a data transfer between a data memory (11) and another function unit (6, 13), in which the direct memory access control (DMA 18) is provided for generating a first part (a0, a6, a7, ..., a19) of an address (a0, ..., a19) of a memory area to be addressed, **characterized in that** a generator (22) working as a counter for cyclically generating a second part (a1, ..., a5) of the address (a0, ..., a19) takes over the count function of the direct memory access control.

## Revendications

1. Dispositif de commutation avec une commande d'accès direct à la mémoire (DMA, 18) qui sert à la commande d'une transmission de données entre une mémoire de données (11) et une unité d'entrée/sortie (6, 13, 16), la commande d'accès direct à la mémoire (DMA, 18) étant prévue pour la production d'une première partie (a0, a6, a7, ..., a19) d'une adresse (a0, ..., a19) d'une zone de mémoire à adresser,
**caractérisé en ce qu'**un générateur (22) faisant office de compteur prend en charge la fonction de comptage de la commande d'accès direct à la mémoire pour la production cyclique d'une deuxième partie (a1, ..., a5) de l'adresse (a0, ..., a19).

2. Dispositif de commutation selon la revendication 1, **caractérisé en ce qu'**un dispositif de commutation (20) dépendant de l'état de la commande d'accès direct à la mémoire (DMA, 18) est prévu

   - pendant un premier état de commutation pour le couplage d'un nombre déterminé de lignes d'adresse qui servent à la fourniture de bits d'adresse à la mémoire de données avec un nombre correspondant de sorties d'adresse (a1', ..., a5') d'une unité de commande (12) présentant un processeur CPU, 17) et
   - pendant un deuxième état de commutation pour le couplage de ces lignes d'adresse avec un nombre correspondant de sorties de générateur (a1, ..., a5) pour la production de la deuxième partie (a1, ..., a5) de l'adresse.

3. Dispositif de commutation selon la revendication 1 ou 2,
**caractérisé en ce qu'**un nombre déterminé de sorties de générateur (a1", ..., a5") produisant des bits d'adresse est couplé respectivement avec une ligne d'adresse pendant la transmission de données entre la mémoire de données (11) et l'unité d'entrée/sortie (6, 13, 16) dans la première des deux directions de transmission et
que, dans la deuxième direction de transmission, au moins l'une de ces sorties de générateur (a5") n'est pas couplée avec une ligne d'adresse.

4. Circuit de transmission de données avec une commande d'accès direct à la mémoire (DMA, 18) qui sert à la commande d'une transmission de données entre une mémoire de données (11) et une autre unité fonctionnelle (6, 13), la commande d'accès direct à la mémoire (DMA, 18) étant prévue pour la production d'une première partie (a0, a6, a7, ..., a19) d'une adresse (a0, a19) d'une zone de mémoire à adresser,
**caractérisé en ce qu'**un générateur (22) faisant office de compteur prend en charge la fonction de comptage de la commande d'accès direct à la mémoire pour la production cyclique d'une deuxième partie (a1, ..., a5) de l'adresse (a0, ..., a19).

FIG. 1

FIG. 2

125 μs

TS31 | TS0 | ⋯ | TS16 | ⋯ | TS31 | TS0 | ⋯

n-1 | n | n+1

# FIG. 3

A0 | TS16(n)
A1 | TS16(n+1)
A2 | TS16(n+2)
⋮
A30 | TS16(n+30)
A31 | TS16(n+31)

# FIG. 4A

A0 | TS16(n)
A1 | TS16(n+1)
A2 | TS16(n+2)
⋮
A14 | TS16(n+14)
A15 | TS16(n+15)

# FIG. 4B